Europäisches Patentamt

**European Patent Office**

Office européen des brevets

(19)

(11) Publication number : **0 328 366 B1**

# (12) EUROPEAN PATENT SPECIFICATION

(45) Date of publication of patent specification :
**16.09.92 Bulletin 92/38**

(51) Int. Cl.⁵ : **F16L 5/02, H02G 3/22**

(21) Application number : **89301207.0**

(22) Date of filing : **08.02.89**

(54) **Resilient device.**

(30) Priority : **08.02.88 GB 8802842**

(43) Date of publication of application :
**16.08.89 Bulletin 89/33**

(45) Publication of the grant of the patent :
**16.09.92 Bulletin 92/38**

(84) Designated Contracting States :
**AT BE CH DE ES FR GB IT LI NL SE**

(56) References cited :
**EP-A- 0 152 696**
**EP-A- 0 179 657**
**EP-A- 0 242 189**
**EP-A- 0 246 894**
**DE-A- 3 213 414**
**US-A- 4 478 437**

(73) Proprietor : **N.V. RAYCHEM S.A.**
**Diestsesteenweg 692**
**B-3200 Kessel-lo (BE)**

(72) Inventor : **Brusselmans, Jacques Hubert**
**François**
**15 Rue Bourgemestre Dandoy**
**B-5950 Orp-Jauche (BE)**
Inventor : **Vansant, Jan Lodewijkgh M.F.G.**
**Minneveld 2**
**B-3040 Leuven (BE)**

(74) Representative : **Benson, John Everett et al**
**Raychem Limited Intellectual Property Law**
**Department Faraday Road Dorcan**
**Swindon, Wiltshire SN3 5HH (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a resilient device suitable for expanding a sealing article. It finds particular application as a device for expanding a sealing sleeve for use as a duct seal.

A duct seal is a seal provided, against the ingress of contaminants, between a duct and a substrate (such as supply-line) passing into the duct. A number of duct seals are known in the art. They include simple solutions such as wrapped tapes and a variety of innovative more sophisticated solutions.

One duct seal which is already knowwn, and is relevant to the present invention is described in EP - A-0179657 the prior art duct seal comprises (I) a polymeric sealing sleeve which can provide a seal between a duct and a substrate carried by the duct and (2) a resilient member (in the form of a wrapped spring metal cylinder) which can be operated after positioning of the sealing member in the duct. On operation the resilient member increases its periphery to provide a resiliently biassed engagement between the sealing member and the duct.

DE-A-32l34l4 discloses a duct seal in the form of a double sleeve having cylindrical inner and outer regions, the inner lying against a cable within the duct, and the outer lying against an inner surface of the duct. A biassed expanding element forces the outer region against that surface of the duct.

EP-A-0246894 (Raychem) discloses a feedthrough device having a portion that can be biased into contact with a duct wall. This is done by an internal biasing means which can be released to expand the feedthrough by means of a release mechanism comprising a fusible or softenable material that is heated, allowing the biasing means to relax.

In the present invention we provide a duct seal which also uses a resilient biassing member. In the present case the biassing member includes a retaining member which extends through apertures in overlapping edges of a biasing member.

Thus, the present invention provides a duct seal comprising:

(a) a sealing sleeve that can be expanded to seal internal surface of the duct; and

(b) a device suitable for expanding the sealing sleeve which comprises a hollow, tubular resilient biassing member deformed against its resilience from a first configuration to a second configuration having a smaller periphery than the first configuration, characterized in that:

(i) the resilient member comprises a wrapped sheet which at least in its second configuration has overlapping longitudinal edges,

(ii) a retaining member is provided which can be passed through overlapping apertures in the overlapping edges to hold the resilient member in its second configuration,

(iii) the device additionally comprises said retaining member that extends through the apertures to retain the resilient member in its second configuration allowing the device to be positioned within the sealing sleeve, the retaining member weakening on application of heat thereby releasing the resilient member and allowing it to relax from its second configuration and increase its periphery, thereby expanding the sealing sleeve.

The retaining member weakens on application of heat stimulus. Preferably the retaining member reduces its rigidity. More preferably it melts.

One or more retaining members may be used.

Preferably the hollow tubular resilient member is generally cylindrical. Typically the member is a cylinder of smaller diameter in its second configuration than in its first configuration.

The resilient member comprises a wrapped sheet, which at least in its second configuration has overlapped longitudinal edges. Preferably the wrapped sheet is generally cylindrical. In the second configuration of the biassing member the apertures are arranged to overlap, and the retaining member passed therethrough. This arrangement holds the resilient member in its second configuration.

As the retaining member is inserted through apertures in the resilient member, the relative shapes of the retaining member and the apertures are preferably arranged so that the retaining member can be inserted in the field, and then locked in position relative to the resilient member. In one embodiment the apertures are elongate slots. To co-operate with these slots the retaining member is preferably generally "H" shaped. Preferably the retaining member is inserted with one of the stems of the "H" first into the slot. Then it is preferably turned through 90° so that the stems of the "H" lie on opposite sides of the resilient member. Thus the resilient member and the retaining member are locked in position relative to each other until the application of the stimulus.

The duct seal, the sleeve of which is preferably polymeric, is positioned inside a duct. Relaxation of the device causes it to increase its periphery. The relative dimensions of the biassing member (in both its first and second configuration) and the sleeve are selected relative to the duct so that (l) the biassing member in its second configuration fits easily within the sleeve, (2) the sleeve fits easily within the duct, and (3) on relaxation the biassing member deforms the sleeve outwards into contact with the inside wall of the duct.

The retaining member must weaken in integrity only after the sleeve and biassing member are inside the duct. Where there is a delayed reaction between application of the heat and the weakening in integrity of the retaining member the heat may be applied when the device is outside the duct. Preferably, however, the heat is applied after the biassing device and the sleeve are inside the duct.

The sleeve is preferably tubular, and it may be a tube of open or closed cross-section. A tube of open cross section is a wraparound sleeve.

In preferred embodiments the sealing sleeve preferably projects beyond the end of the duct. The projecting portion is preferably heat-shrinkable and is used for sealing the sleeve to the substrate passing through the duct.

The sealing sleeve is preferably coated on one or both surfaces with an adhesive or sealant. The portion of the sleeve inside the duct is preferably coated on its outer surface to seal to the duct. Where there is a projecting portion, this is preferably coated on its inside surface, to seal to the substrate passing through the duct.

The stimulus to weaken the integrity of the retaining member is heat. This heat may conveniently be applied to the retaining member electrically.

The sealing sleeve around the biassing member is preferably also heated during its installation. Such heating is desirable to soften the sleeve to make it more easily deformable into contact with the duct by the biassing member. Also where a heat shrinkable portion of the sleeve projects beyond the duct, heat is desirable at that portion to effect shrinkage. In these cases heating of the retaining member may conveniently be effected by positioning the retaining member in thermal contact with the sleeve and heating the sleeve.

In order that the retaining member is heated inside the duct (as is desirable), the sleeve is preferably also heated inside the duct. This can conveniently be done by using a sealing sleeve which comprises self-contained heating means. These heating means may be integral with the sleeve or fixed thereto. As an example a wire heater or a conductive polymeric strip heater may be fixed to the sealing sleeve and heated electrically. As another example the sealing sleeve may itself comprise conductive polymeric material, and the sleeve be electroded to pass electrical current through the sleeve.

Preferably the retaining member weakens in integrity by melting. Preferably it melts in the temperature range 60-150°C, more preferably 80-100°C, to release the biassing member. If the melting point of the retaining member is too high it may be difficult to achieve melting. If it is too low it may melt and release the resilient member before it is properly installed in the duct.

Any suitable material may be used for the retaining member. It must be able to withstand the biassing forces exerted on it by the resilient member at least for a short period of time. In preferred embodiments the retaining member is positioned and co-operates with the resilient member only in the field. This means it has to withstand the biassing forces only for a short period of time and not for longer storage periods. Examples of suitable materials include low melting point alloys, meltable polymeric materials and meltable adhesives. Suitable adhesives include polyamides, particularly those described in EP-B-0040926 (Raychem).

Embodiments of the invention will now be described, by way of example, with reference to the accompanying drawings wherein:

Figure I is a perspective view of a device as used in the invention; and

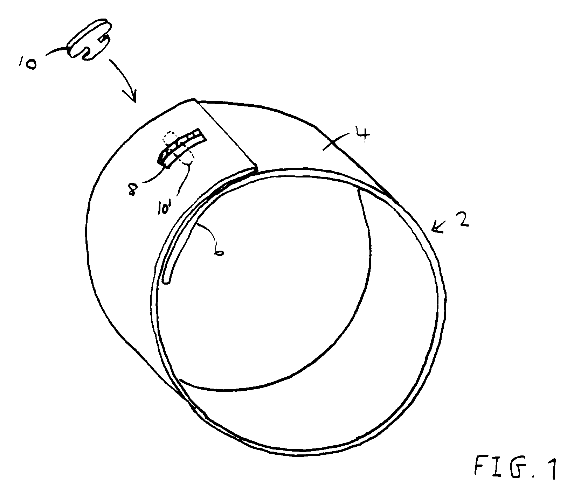

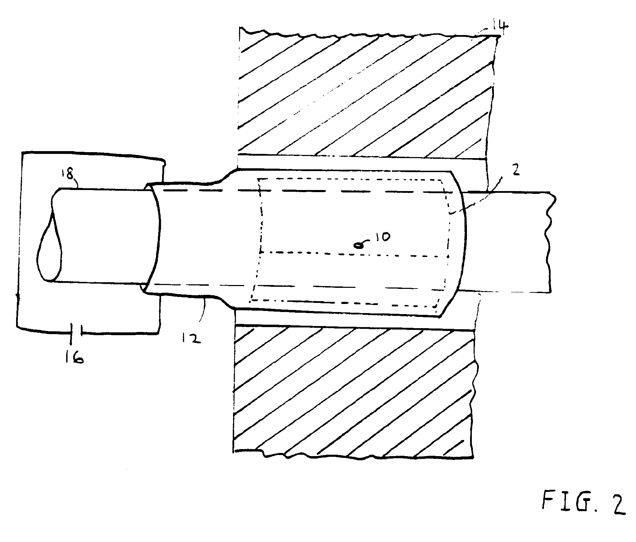

Figure 2 is a side view of a duct seal incorporating the device of Figure I.

Referring to the drawings the resilient biassing device 2 comprises a wrapped cylinder of spring metal 4. The device 2 is shown in figure I in the second configuration according to the invention, i.e. in a deformed configuration in which the longitudinal edges of the metal 4 overlap in region 6. Each of the two longitudinal edges contains a slotted aperture 8, in the overlap region 6, and these apertures overlie each other in the second configuration of the device 2, as shown in Figure I. A retaining member 10 comprising a low melting point allow can be inserted in the field through the apertures 8. The retaining member 10 is generally H-shaped in configuration. The member is inserted with one of the stems of the H first into the apertures and then turned through 90° so that one stem of the H lies on the inside and one of the outside of the resilient member. The inserted position of the member 10 is shown by dotted lines 10′. The positioned slotted member 10′ is this locked in position relative to resilient member 2, and temporarily holds the resilient member in its deformed second configuration.

The relaxed position of the resilient member 2 is a cylinder of larger diameter. Therefore if the retaining member 10 is not present the resilient member 2 tends to uncurl, increasing its periphery. In operation where the resilient member 2 is used to act on a sealing sleeve the retaining member 10 is heated until it melts. It then allows the resilient member 2 to relax and urge outwards a surrounding sleeve.

Figure 2 shows the device 2 of Figure I in its second configuration inside a polymeric sealing sleeve 12 in a duct in a wall 14. The sealing sleeve 12 is electrically heatable and is connected to a power source 16. The sleeve 12 is in thermal contact with the spring metal resilient device 2 which is in thermal contact with the retaining member 10. The sealing sleeve 12 projects from the wall, and the projecting portion is heat shrinkable. A substrate 18 passes through the resilient device 2 and sealing sleeve 12.

In order to install the duct seal electrical current is supplied from source 16. This heats the entire sleeve 12 and consequently the resilient member 2 and

retaining member I0. The retaining member I0 melts on heating and the portion of the sleeve I2 surrounding it softens. The resilient member therefore relaxes and deforms the softened sleeve I2 outwards into sealing contact with the duct. Also the end of the sleeve I2 projecting from the duct shrinks into sealing contact with the substrate I8. Thus a seal is formed between the duct in wall I4 and the substrate I8.

## Claims

1. A duct seal comprising:
   (a) a sealing sleeve that can be expanded to seal internal surface of the duct; and
   (b) a device suitable for expanding the sealing sleeve which comprises a hollow, tubular resilient biassing member deformed against its resilience from a first configuration to a second configuration having a smaller periphery than the first configuration, characterized in that:
   (i) the resilient member comprises a wrapped sheet which at least in its second configuration has overlapping longitudinal edges,
   (ii) a retaining member is provided which can be passed through overlapping apertures in the overlapping edges to hold the resilient member in its second configuration,
   (iii) the device additionally comprises said retaining member that extends through the apertures to retain the resilient member in its second configuration allowing the device to be positioned within the sealing sleeve, the retaining member weakening on application of heat thereby releasing the resilient member and allowing it to relax from its second configuration and increase its periphery, thereby expanding the sealing sleeve.

2. A device according to claim I, wherein the retaining member comprises a fusible alloy.

3. A device according to claim I, wherein the retaining member comprises a heat activatable adhesive.

## Patentansprüche

1. Rohrleitungsdichtung, die folgendes aufweist:
   (a) eine Abdichthülse, die aufweitbar ist, um die Innenfläche der Leitung abzudichten; und
   (b) eine zum Aufweiten der Abdichthülse geeignete Einrichtung, die ein hohles, rohrförmiges, elastisches Vorspannungselement aufweist, das entgegen seiner Elastizität aus einer ersten Konfiguration in eine zweite Konfiguration verformt ist, die einen kleineren Umfang als die erste Konfiguration hat,
dadurch gekennzeichnet, daß:
   (i) das elastische Element einen gewickelten Flächenkörper aufweist, der wenigstens in seiner zweiten Konfiguration überlappende Längsränder hat,
   (ii) ein Halteteil vorgesehen ist, das durch überlappende Öffnungen in den überlappenden Rändern geführt werden kann, um das elastische Element in seiner zweiten Konfiguration zu halten,
   (iii) die Einrichtung zusätzlich das Halteteil aufweist, das sich durch die Öffnungen erstreckt, um das elastische Element in seiner zweiten Konfiguration festzuhalten, so daß die Einrichtung innerhalb der Abdichthülse positioniert werden kann, wobei das Halteteil beim Aufbringen von Wärme geschwächt wird und dadurch das elastische Element freigibt und ihm erlaubt, sich aus seiner zweiten Konfiguration heraus zu entspannen und seinen Umfang zu vergrößern, so daß dadurch die Abdichthülse aufgeweitet wird.

2. Vorrichtung nach Anspruch 1, wobei das Halteteil eine schmelzfähige Legierung aufweist.

3. Vorrichtung nach Anspruch 1, wobei das Halteteil einen durch Wärme aktivierbaren Klebstoff aufweist.

## Revendications

1. Joint d'étanchéité de gaine comportant :
   (a) un manchon d'étanchéité qui peut être expansé pour réaliser l'étanchéité avec la surface intérieure de la gaine ; et
   (b) un dispositif convenant à l'expansion du manchon d'étanchéité qui comporte un élément élastique tubulaire creux de rappel déformé contre son élasticité, d'une première configuration à une seconde configuration ayant une périphérie plus petite que celle de la première configuration, caractérisé en ce que :
   (i) l'élément élastique comporte une feuille enroulée qui, au moins dans sa seconde configuration, présente des bords longitudinaux en recouvrement,
   (ii) un élément de retenue est prévu, lequel peut être passé dans des ouvertures en recouvrement dans les bords en recouvrement afin de maintenir l'élément élastique dans sa seconde configuration,

(iii) le dispositif comporte en outre ledit élément de retenue qui passe dans les ouvertures de façon à retenir l'élément élastique dans sa seconde configuration permettant au dispositif d'être positionné à l'intérieur du manchon d'étanchéité, l'élément de retenue s'affaiblissant sous l'application de chaleur afin de libérer l'élément élastique et de lui permettre de se relaxer depuis sa seconde configuration et d'accroître sa périphérie, expansant ainsi le manchon d'étanchéité.

2. Dispositif selon la revendication 1, dans lequel l'élément de retenue comprend un alliage fusible.

3. Dispositif selon la revendication 1, dans lequel l'élément de retenue comprend un adhésif pouvant être activé par la chaleur.

FIG. 1

FIG. 2